# EUROPÄISCHE PATENTANMELDUNG

(11) **EP 4 852 618 A1**
(43) Veröffentlichungstag der Anmeldung: **09.12.2026**
(21) Anmeldenummer: 26182235.7
(22) Anmeldetag: 01.06.2026
(51) Int. Cl.: H05B 47/155, B60Q 3/47, B64D 11/00, B64D 47/02, H05B 45/10, H05B 45/20

(54) **ANSTEUERUNG EINES LICHTMODULS MIT EINER LICHTDEFINITION MIT HIERARCHISCHEN LICHTEBENEN MIT LICHTSZENEN**

(30) Priorität: 06.06.2025 DE 102025122402
(71) Anmelder: Diehl Aerospace GmbH, 88662 Überlingen (DE)
(72) Erfinder: Bachmaier, Steffen, 90537 Feucht (DE); Jordan, Jens, 90411 Nürnberg (DE)
(74) Vertreter: Diehl Patentabteilung

(57) **Zusammenfassung**

Bei einem Verfahren wird A) für ein Lichtmodul (8a-c) eine Lichtdefinition (20a-c) bereitgestellt, die einen Verlauf eines Farbe (F) und Helligkeit (H) von Licht (L) bestimmenden Parameters (Pa-c) über der Zeit (t) bestimmt, und die eine erste Lichtebene (E1) mit einem Grundwert (22) und wenigstens eine weitere hierarchisch geordnete Lichtebenen (E2-4) mit Lichtszenen (24a-d) mit Modifikatoren (26a-d) enthält, und wird B) der aktuelle Parameter (PA-c) wie folgt bestimmt: Der Grundwert (22) der ersten Lichtebene (E1) wird sukzessive durch die Modifikatoren (26a-d) in hierarchischer Abfolge der Lichtebenen (E2-4) zu einem jeweiligen Ebenenwert (32a-d) hin modifiziert, der Parameter (Pa-c) wird als oberster Ebenenwert (32d) übernommen.

Eine Kabinenbeleuchtung (6) für eine Passagierkabine (4) eines Passagierflugzeuges (2) enthält wenigstens ein Lichtmodul (8a-c) und eine Gesamtsteuerung (10), um das Verfahren auszuführen.

## Beschreibung

Die Erfindung betrifft die Beleuchtung einer Passagierkabine eines Passagierflugzeuges mit Hilfe einer Vielzahl von im Betrieb Licht erzeugenden Lichtmodulen.

Aus der DE 10 2018 000 216 A1 ist ein Wiedergabegerät für eine Passagierkabine eines Flugzeuges bekannt, zur Wiedergabe von optischen Inhalten in der Passagierkabine mit Beleuchtungseinrichtung mit Leuchten, Steuereinheit und Steuerleitung, wobei die Steuereinheit einen Befehlssatz von Lichtbefehlen zur Ansteuerung der Leuchten enthält. Das Wiedergabegerät enthält einen Speicher für die wiederzugebenden Inhalte, eine Schnittstelle zur Steuerleitung, und einen Dekoder zum Empfang der Lichtbefehle mit einer Zuordnungsvorschrift für die Lichtbefehle auf Steuerbefehle für das Wiedergabegerät. Eine Wiedergabestruktur für die Passagierkabine zur Wiedergabe der Inhalte enthält die Wiedergabeeinheit und die Beleuchtungseinrichtung. Bei einem Verfahren zum Betreiben des Wiedergabegerätes werden die Inhalte in einem Speicherzeitraum im Speicher gespeichert und das Wiedergabegerät in einem Betriebszeitraum vermittels Lichtbefehlen gesteuert. Bei einer Verwendung der Beleuchtungseinrichtung wird das Wiedergabegerät an der Steuerleitung angeschlossen und von der Steuereinheit mit den Lichtbefehlen als Steuerbefehlen angesteuert.

Aufgabe der Erfindung ist es, Verbesserungen im Hinblick auf die Beleuchtung einer Passagierkabine eines Passagierflugzeuges mit Hilfe einer Vielzahl von im Betrieb Licht erzeugenden Lichtmodulen vorzuschlagen.

Die Aufgabe der Erfindung wird gelöst durch ein Verfahren gemäß Patentanspruch 1. Bevorzugte oder vorteilhafte Ausführungsformen der Erfindung sowie anderer Erfindungskategorien ergeben sich aus den weiteren Ansprüchen, der nachfolgenden Beschreibung sowie den beigefügten Figuren.

Das Verfahren ist ein solches zum Betreiben eines Lichtmoduls, wobei sich das Lichtmodul in einer Passagierkabine eines Passagierflugzeuges befindet. Der Begriff "Passagierflugzeug" ist hier weit zu verstehen und schließt auch z.B. eVTOL (electrical vertical takeoff and landing vehicle) oder andere entsprechende Fluggeräte ein, die zum Transport von Passagieren bestimmt sind. Das Lichtmodul ist z.B. Bestandteil einer Beleuchtungseinrichtung, wie sie oben erwähnt wurde.

Bei dem Verfahren erzeugt das Lichtmodul zu einem jeweiligen bzw. bestimmten Zeitpunkt in seinem Betrieb Licht einer bestimmten Helligkeit und / oder Farbe. Der Zeitpunkt befindet sich bzw. liegt innerhalb einer geplanten Betriebsdauer für das Lichtmodul. Zu dem jeweiligen bestimmten Zeitpunkt sind Helligkeit und / oder Farbe des Lichts durch einen Parameter bestimmt, welcher ein zum Zeitpunkt aktueller Parameter ist. Der Parameter beeinflusst also Helligkeit und / oder Farbe bzw. gibt entsprechende Kommandos für das Lichtmodul vor, damit dieses entsprechendes Licht erzeugt. Der Parameter ist also über den Verlauf der Zeit zeitvariabel. So kann Licht erzeugt werden, dessen Helligkeit und Farbe sich - gemäß Zeitverlauf der Werte des Parameters - über der Zeit ändert.

Der "bestimmte Zeitpunkt" kann auch ein Zeitintervall sein, während dem Licht konstanter Helligkeit und / oder Farbe erzeugt wird. Ein derartiges Zeitintervall ist zum Beispiel eine 1/60 Sekunde bei einem 60Hz-Betrieb des Lichtmoduls. Dies bedeutet, dass jeweils alle 1/60 Sekunde Helligkeit und oder Farbe des Lichts verändert werden können und diese dann für die nächste 1/60 Sekunde konstant bleiben. Ein bestimmter Parameter bzw. dessen Wert gilt dann für jeweils 1/60 Sekunde. Ein anderes typisches Zeitintervall beträgt z.B. 200ms. Der "Zeitpunkt" bzw. das Zeitintervall kann aber auch kürzer gewählt werden, so dass ein "fließend" erscheinender Farb-/Helligkeitsübergang von einer Startwert zu einem Zielwert des Parameters (über eine Vielzahl von Zwischenwerten) innerhalb von z.B. 200ms erfolgen kann.

Die geplante Betriebsdauer ist beispielsweise eine Flugdauer eines Fluges des Passagierflugzeuges oder die Dauer einer bestimmten Flugphase, z.B. Take-off, Landing, Boarding usw.

Bei dem Verfahren wird zunächst ein Schritt A ausgeführt. Im Schritt A wird für das Lichtmodul eine Lichtdefinition bereitgestellt. Die Lichtdefinition bestimmt einen Verlauf des Parameters bzw. des Wertes des Parameters über der Zeit während der gesamten Betriebsdauer. Mit anderen Worten legt die Lichtdefinition fest, in welcher Helligkeit und mit welchen Farben das Lichtmodul über die Betriebsdauer hinweg Licht erzeugen soll bzw. wie sich Helligkeit und Farben dabei in einem Zeitverlauf verändern sollen. Die Lichtdefinition ist / wurde bzw. wird dabei wie folgt erzeugt bzw. weist die entsprechenden Eigenschaften auf. Dies gliedert sich in mehrere Teilschritte / Teilaspekte:
In einem Schritt / Aspekt A1 wird oder ist eine erste Lichtebene definiert, die sich über die gesamte Betriebsdauer erstreckt. Die erste Lichtebene enthält einen zeitlichen Verlauf eines Grundwertes für den Parameter. Der Grundwert entspricht dabei einem vollwertigen Parameter. Mit anderen Worten bestimmt die erste Lichtebene wie der entsprechende Parameter bzw. dessen Werte in Form des Grundwertes über die gesamte Betriebsdauer verläuft. Der Parameter beinhaltet dann z.B. Definitionen der Rot(R)-, Grün(G)- und Blau(B)-Anteile, ggf. auch eines Weiß(W)-Anteils der Farbe sowie der Helligkeit (H) des vom Lichtmodul zu erzeugenden / abzustrahlenden Lichts. Die Definition kann z.B. auch über den CIE-1976 u'v'L-, RGB-, xyL-, oder Adobe-Farbraum usw. erfolgen. Z.B. wird bei der Ansteuerung von Leuchten ein u'v'L-, bei bildgebenden Einheiten wie Display oder Projektor ein RGB(W)/H-Farbraum genutzt.

"Wird oder ist" ist dabei so zu verstehen, dass die Lichtdefinition entweder innerhalb des Verfahrens zunächst erzeugt und bereitgestellt "wird" oder die Lichtdefinition außerhalb, also vor Ausführung des Verfahrens schon erzeugt wurde, also für das Verfahren schon erzeugt "ist", und in dem Verfahren lediglich noch bereitgestellt wird. Dies gilt sinngemäß auch für die nachfolgenden Ausführungen.

In einem Schritt / Aspekt A2 werden oder sind, je nach gewünschtem Licht bzw. Lichtverhältnissen (Helligkeit und Farbe) in der Passagierkabine eine oder mehrere weitere Lichtebenen definiert. Dies richtet sich nach den Wünschen des Anwenders des vorliegenden Verfahrens. So können z.B. für verschiedene Flugphasen oder Flüge (Betriebsdauern) unterschiedliche Lichtdefinitionen mit unterschiedlich vielen (eine (das ist dann die zweite), zwei (zweite und dritte), ...) weitere Lichtebenen definiert / geschaffen werden. Sämtliche weiteren Lichtebenen sind stets hierarchisch geordnet. Das heißt es wird zusätzlich zur ersten eine zweite oder weiter zusätzlich eine dritte oder weiter zusätzlich eine vierte Lichtebene usw. definiert. Die Ordnungszahl der Ebene ist deren Hierarchieebene.

In einem Schritt / Aspekt A3 werden bzw. ist dann in jeder der tatsächlich vorhandenen / definierten weiteren (zweite, dritte, vierte, ...) Lichtebenen jeweils wenigstens eine Lichtszene definiert. Die Lichtszene erstreckt sich hierbei zumindest über einen jeweiligen Zeitabschnitt der Betriebsdauer. Sie kann sich auch über die gesamte Betriebsdauer erstrecken. Lichtszenen überlappen sich nicht, sondern folgen zeitlich, ggf. lückenlos, aufeinander. Nur während des Zeitabschnittes wirkt die Lichtszene modifizierend, wie weiter unten erläutert wird.

In bzw. gemäß einem Schritt / Aspekt oder Merkmal A4 enthält jede Lichtszene einen zeitlichen Verlauf eines Modifikators. Der Modifikator enthält bzw. entspricht zumindest einem Teil eines Parameters. Das heißt: Der jeweilige Modifikator modifiziert - wenn dieser ausgewertet wird, siehe unten - wenigstens einen Teil eines Parameters, der aus Lichtebenen niedrigerer Hierarchiestufen stammt, d.h. er verändert einen bestehenden Parameter zumindest teilweise (z.B. Transparenzmodifikator, siehe unten) oder ersetzt diesen vollständig durch einen anderen Parameter (z.B. Deckmodifikator, siehe unten).

In dem Verfahren ist nun gemäß Schritt A die Erstellung / Bereitstellung der Lichtdefinition vollständig abgeschlossen und liegt für den weiter folgenden Verfahrensteil vor.

Im Verfahren folgt nun ein Schritt B. Im Schritt B wird der aktuelle Parameter für den jeweiligen Zeitpunkt (ggf. Zeitintervall, siehe oben) innerhalb der Betriebsdauer anhand der Lichtdefinition wie folgt bestimmt: Mit anderen Worten befindet sich das Flugzeug bzw. die Passagierkabine nun in einem Zustand, in welchem die Betriebsdauer aktuell abläuft, sich die Lichtmodule also im Betrieb befinden und Licht bestimmter Helligkeit und / oder Farbe erzeugen sollen.

In einem Schritt B1 wird jeweils zum jeweiligen Zeitpunkt der Grundwert der ersten Lichtebene verwendet und wird sukzessive in hierarchisch aufsteigender Reihenfolge durch die für diesen bestimmten Zeitpunkt definierten bzw. dem Zeitpunkt zugeordneten Modifikatoren in den jeweiligen Lichtebenen modifiziert. Dies geschieht in hierarchischer Abfolge der Lichtebenen so lange, bis die hierarchisch obersten Lichtebene erreicht ist bzw. verarbeitet wurde. Das Ergebnis dieser durch die Modifikatoren vorgenommenen Veränderung des Grundwertes liefert den aktuellen Parameter bzw. dessen Wert.

Nach Berücksichtigung jeder der Ebenen ergibt sich so ein Ebenenwert als temporärer Wert bzw. Zwischenergebnis der Auswertung. Bei der Berücksichtigung der hierarchisch nachfolgenden Ebene wird dieser temporäre Ebenenwert durch die Lichtszene der aktuellen Ebene (falls vorhanden) modifiziert und ergibt einen neuen, ggf. veränderten temporären Ebenenwert. Nach Berücksichtigung der letzten Ebene höchster Hierarchie wird der dann resultierende Ebenenwert als Parameter bzw. dessen Wert erhalten.

Nach der Verarbeitung sämtlicher Lichtebenen in hierarchisch aufsteigender Weise (erste, dann ggf. zweite, dann ggf. dritte, usw.) liegt also der Parameter als Ergebnis aller Modifikationen des Grundwertes vor.

In einem Schritt B2 wird daher der Parameter als oberster Ebenenwert in Form des Ergebnisses aller Modifikationen des Grundwertes übernommen.

Mit anderen Worten wird also ausgehend von der ersten Lichtebene zunächst der darin definierte Grundwert genommen und Lichtebene für Lichtebene weiter modifiziert, bis schlussendlich der Parameter ermittelt ist.

Der Schritt B wird stets ausgeführt, wenn für einen bestimmten Zeitpunkt der Parameter ermittelt werden soll, z.B. wird der Schritt B zyklisch während des Ablaufes der gesamten Betriebsdauer ausgeführt, z.B. alle 1/60 Sekunde.

Das Verfahren arbeitet sich also Ebene für Ebene aufwärts.

In umgekehrter Richtung lässt sich dies bildlich gesprochen auch so ausdrücken, dass Farbe und Helligkeit von Licht gemäß Vorgabe der Grundebene her durch alle hierarchisch aufsteigenden Ebenen "nach oben" scheint und dabei von anderen Farben oder Helligkeiten modifiziert (z.B. im Sinne einer Farbbeimischung) oder überdeckt wird.

Durch die Definition der Lichtebenen und Lichtszenen ist eine hierarchische Planung von Beleuchtung in der Passagierkabine eines Passagierflugzeuges möglich. Die Gestaltung von Beleuchtungseffekten in der Passagierkabine kann besonders intuitiv und einfach hierarchisch entwickelt bzw. designed werden. Die Erfindung bietet außerdem die Möglichkeit zu einer verteilten Lichtsteuerung, die nicht von einer einzigen zentralen Steuereinheit, sondern von einem verteilten System ermöglicht werden kann. Dabei können z.B. Grundwerte und Lichtszenen von verschiedenen Zentralmodulen stammen und an verschiedene Steuermodule bereitgestellt und dann gemeinsam von je einem der Steuermodule ausgewertet werden.

In einer bevorzugten Ausführungsform wird oder ist in Schritt A4 wenigstens einer der Modifikatoren als Deckmodifikator gewählt. Dieser besteht dann aus einem Deckwert, der einem vollwertigen Parameter entspricht. Hierbei handelt es sich also beispielsweise um den bzw. einen vollständigen oben genannten RGB(W)/H-Wert oder u'v'L-Wert. Der aktuelle Deckmodifikator ersetzt damit den Grundparameter bzw. die temporären Ebenenwerte niedrigerer Hierarchieebenen vollständig. Der temporärer Ebenenwert der aktuellen Hierarchieebene entspricht dann dem Wert des Deckmodifikators bzw. dem Deckwert. Mit anderen Worten werden alle Lichtcharakteristiken von Lichtebenen niedrigerer Hierarchiestufen durch den Deckwert überschrieben.

In einer bevorzugten Ausführungsform wird in Schritt A4 wenigstens einer der Modifikatoren als Transparenzmodifikator gewählt. Dieser enthält einen Transparenzwert. Der Transparenzwert beschreibt, dass ein Transparenzanteil des hierarchisch nächsten untergeordneten Ebenenwertes unverändert belassen wird. Der Transparentmodifikator enthält allerdings ebenfalls einen Deckwert, wie er oben beschrieben wurde. Allerdings wird durch den Transparenzmodifikator nur der nicht zum Transparenzanteil gehörende untergeordnete Ebenenwert durch den Deckwert ersetzt. Mit anderen Worten mischt der Transparenzmodifikator einem je nach Transparenzwert mehr oder weniger "durchscheinenden" darunterliegenden Ebenenwert nur einen Anteil des Deckwertes zu. Der Transparenzwert bzw. Transparenzanteil ist daher insbesondere ein Alphawert im Sinne eines Alpha-Blending.

Gemäß dieser Ausführungsform wird also im Ebenenwert ein Teil der Farb- / Helligkeitsinformation des Lichts durch den Deckwert bestimmt, der restliche Teil der Farbinformation besteht in der durchscheinenden Farbinformation des Ebenenwertes der hierarchisch nachgeordneten nächsten Lichtebene.

In derart geschaffenen Lichtszenen sind somit besonders flexible bzw. optisch ansprechende Farbkonzepte für Lichtszenarien mit transparent durchscheinenden Farbhelligkeitsanteilen möglich.

Eine bevorzugte Ausführungsform des Verfahrens geht davon aus, dass das Lichtmodul ein Steuermodul enthält. Schritt A des Verfahrens wird dann außerhalb des Steuermoduls ausgeführt. Die in Schritt A erzeugte Lichtdefinition wird allerdings an das Steuermodul übertragen. Schritt B des Verfahrens wird dann in dem Steuermodul ausgeführt.

Wie oben bereits angedeutet, kann somit eine verteilte Lichtsteuerung in der Passagierkabine erfolgen. Lichtszenarien können - z.B. zentral - außerhalb der Lichtmodule erzeugt werden und anhand der Lichtdefinition manifestiert werden. Die Auswertung der Lichtdefinition, also die Erzeugung der jeweiligen Parameter für das Lichtmodul, mit welchen das Lichtmodul also zu betreiben ist, wird jedoch - dann z.B. dezentral - im Lichtmodul bzw. dessen Steuermodul ausgeführt. Das restliche Flugzeug ist somit durch das Steuermodul von den betreffenden Aufgaben entlastet. Eine Skalierung von Lichtmodulen bzw. einer Kabinenbeleuchtung auch mit einer großen Anzahl von Lichtmodulen und ist somit möglich.

In einer bevorzugten Ausführungsform wird in einem Schritt C in einer bestehenden Lichtdefinition wenigstens eine Lichtszene hinzugefügt oder verändert oder gelöscht. Dies kann sowohl vor dem tatsächlichen Ablauf der Betriebsdauer erfolgen oder zwischen dem tatsächlichen Ablauf von zwei Betriebsdauern oder auch während des aktuellen Ablaufs einer Betriebsdauer. Mit anderen Worten können Lichtszenarien in Form der Lichtdefinition in der Passagierkabine durch die Modifikation (auch Erzeugen / Entfernen) einzelner Lichtszenen - auch während eines Fluges - leicht modifiziert werden.

In einer bevorzugten Variante dieser Ausführungsform wird Schritt C daher während des tatsächlichen Ablaufes einer Betriebsdauer ausgeführt. Der Schritt C wird dann z.B. zusammen mit den Schritten B ausgeführt. Alternativ oder zusätzlich wird der Schritt C zwischen zweien der Schritte B ausgeführt.

Die Aufgabe wird auch gelöst durch eine Kabinenbeleuchtung gemäß Patentanspruch 7. Die Kabinenbeleuchtung ist eine solche für die bzw. in der oben genannten Passagierkabine des Passagierflugzeuges. Die Kabinenbeleuchtung enthält wenigstens ein oben erläutertes Lichtmodul. Die Kabinenbeleuchtung enthält eine Gesamtsteuerung. Die Gesamtsteuerung ist dazu eingerichtet, das oben erläuterte erfindungsgemäße Verfahren auszuführen, um das wenigstens eine, insbesondere alle Lichtmodule der Kabinenbeleuchtung zu betreiben.

Die Kabinenbeleuchtung und zumindest ein Teil deren möglicher Ausführungsformen sowie die jeweiligen Vorteile wurden sinngemäß bereits im Zusammenhang mit dem erfindungsgemäßen Verfahren erläutert. Insbesondere bilden also die oben im Zusammenhang mit dem Verfahren genannten bevorzugten Ausführungsformen auch bevorzugte Ausführungsformen der Kabinenbeleuchtung.

In einer bevorzugten Ausführungsform ist wenigstens eines, insbesondere mehrere oder alle, der Lichtmodule jeweils eine kleinste ansteuerbare Einheit der Kabinenbeleuchtung, die noch individuell hinsichtlich des Parameters (z.B. RGB(W)/H, siehe oben) des im Betrieb von ihr erzeugten Lichts einstellbar bzw. ansteuerbar ist. Eine noch individuellere Ansteuerung von Licht ist also - z.B. wegen einer Festverdrahtung innerhalb des Lichtmoduls - nicht möglich. Insbesondere dann, wenn jedes Lichtmodul eine jeweils entsprechend kleinste Einheit ist, ist dank der Kabinenbeleuchtung und des zugehörigen Steuerverfahrens eine möglichst feingranulare / hochaufgelöste Ansteuerung der Kabinenbeleuchtung in besonders einfacher Weise möglich.

In einer bevorzugten Ausführungsform der Kabinenbeleuchtung gilt: Die Kabinenbeleuchtung enthält wenigstens ein Steuermodul und jedes der Steuermodule ist in genau einem der Lichtmodule enthalten. Insbesondere enthält die Kabinenbeleuchtung dann die gleiche Anzahl von Steuermodulen und Lichtmodulen. Die Kabinenbeleuchtung enthält außerdem wenigstens ein Zentralmodul, das außerhalb der Lichtmodule angeordnet ist. Die Gesamtsteuerung ist dann aus der Gesamtheit aller Steuermodule und Zentralmodul gebildet.

Insbesondere ist vorgesehen, dass ein Steuermodul mehrere Lichtmodule ansteuert, also zu deren Ansteuerung eingerichtet / konfiguriert ist. Das Steuermodul ist dann ein gemeinsames Steuermodul für die betreffenden Lichtmodule.

Somit ist ein modulares Steuersystem für die Kabinenbeleuchtung geschaffen, bei dem insbesondere die Lichtdefinition (Schritt A oben) im Zentralmodul erstellt werden kann und in den Lichtmodulen ausgewertet werden (Schritt B oben) kann. Dies führt zu einer Entlastung des Zentralmoduls bzw. einer einfachen und effektiven Skalierbarkeit einer Kabinenbeleuchtung. Dies kann einfach durch Hinzufügen weiterer Zentral- und/oder Steuermodule erfolgen. Die schon enthaltenen Steuermodule / Zentralmodule werden hier rechentechnisch bei einer Erweiterung nicht bis kaum zusätzlich belastet.

In einer bevorzugten Ausführungsform Variante dieser Ausführungsform enthält die Kabinenbeleuchtung wenigstens zwei Zentralmodule. In jedem der Zentralmodule ist wenigstens je eine Lichtszene erstellbar und / oder einbringbar und / oder vorhaltbar. Die Lichtszenen sind dabei insbesondere voneinander verschieden und / oder unabhängig voneinander ausgeführt / erstellbar / einbringbar / vorhaltbar. Mit anderen Worten kann durch die Erweiterung der Kabinenbeleuchtung um weitere Zentralmodule die Erstellung / das Einbringen / das Vorhalten weiterer Lichtszenen leicht skaliert werden.

Die Erfindung beruht auf folgenden Erkenntnissen, Beobachtungen bzw. Überlegungen und weist noch die nachfolgenden bevorzugten Ausführungsformen auf. Diese Ausführungsformen werden dabei teils vereinfachend auch "die Erfindung" genannt. Die Ausführungsformen können hierbei auch Teile oder Kombinationen der oben genannten Ausführungsformen enthalten oder diesen entsprechen und/oder gegebenenfalls auch bisher nicht erwähnte Ausführungsformen einschließen.

Gemäß der Erfindung ergibt sich insbesondere eine verteilte Leuchtensteuerung in Flugzeugen mit mehreren Licht-Layern: Mit dem erfindungsgemäßen Konzept ist es möglich die Lichtsteuerung der Leuchten (ist oder enthält ein oder mehrere Lichtmodule) in Flugzeugen von unterschiedlichen, unabhängigen Quellen (Gesamtsteuerung) zu realisieren. Dabei sind die verwendeten "Licht-Layer" (Lichtebenen) hierarchisch angeordnet. Diese werden insbesondere im Endgerät (Lichtmodul, dessen Steuermodul) verarbeitet und der daraus resultierende Farbort und Helligkeit (Parameter) berechnet und dargestellt.

Die Erfindung beruht auf der Erkenntnis, dass die Anzahl der zu steuernden Lichtpunkte (Lichtmodule) im Flugzeug in Zukunft deutlich zunehmen wird. Die derzeitige Infrastruktur im Flugzeug erreicht die Rechenleistungs- und Bandbreitengrenzen.

Aus der Praxis ist es bekannt, dass der zentrale Steuercomputer bisher alle Lichtszenarien gleichzeitig berechnen und die daraus resultieren Farb- und Helligkeitsinformationen an die Leuchten kommandieren musste: Es gibt eine zentrale Recheneinheit für die Berechnung der Lichtszenarien. Von dort werden auch die Lichtkommandos kommandiert. Dabei kommen meistens proprietäre Protokolle zum Einsatz, bei denen entweder Werte für weiß und optional noch Werte für rot, grün, und blau übertragen werden, oder es wird ein Farbort (z.B. uvL-Koordinate) kommandiert.

Grundidee der Erfindung ist es: Es gibt insbesondere mehrere Steuercomputer (Zentralmodule), die unabhängig voneinander Lichtszenarien (Grundwert, Lichtebenen, Lichtszenen, Lichtdefinition) berechnen und an die Leuchten kommandieren. Über definierte Licht-Layer (Lichtebene / Lichtszene) kann die Lampe (Lichtmodul, deren Steuermodul) die daraus resultierende Farbe und Helligkeit darstellen. Da insbesondere mehrere Steuercomputer (Zentralmodul, Steuermodul) unabhängig voneinander Lichtszenarien berechnen, ist eine Skalierung leicht zu realisieren. Dies wird benötigt, wenn die Anzahl der zu steuernden 'Lichtpunkte' (Lichtmodul, insbesondere kleinste ansteuerbare Einheit auf einer Leuchte bzw. in der (Passagier-)Kabine) steigt.

Durch die Einführung der Licht-Layer (Lichtebenen, Lichtszenen) mit der dazugehörigen Transparenz (Alpha, Transparenzmodifikator) wird die Möglichkeit geschaffen, dass die Lampe (Lichtmodul) gleichzeitig mehrere Lichtszenarien (Lichtebenen, Grundwert, Lichtszenen) verarbeiten kann. Diese können wiederum auf verschiedenen Steuercomputern (Zentralmodule) unabhängig voneinander berechnet und kommandiert werden.

Die Erfindung kann auch noch wie folgt dargestellt werden:
Gemäß der Erfindung ergibt sich insbesondere ein Lichtprotokoll mit Alpha-Kanal.

Aus der Praxis ist bekannt: Leuchten im Flugzeug werden entweder diskret oder über Kommunikationsleitungen gesteuert. Wenn die Steuerung über Kommunikationsleitungen erfolgt, kommen meistens proprietäre Protokolle zum Einsatz, bei denen entweder Werte für weiß und optional noch Werte für rot, grün, und blau übertragen werden, oder es wird ein Farbort (e.g. uvL-Koordinate) kommandiert.

Diesbezüglich ist die Idee der Erfindung folgende: Um auch komplexere Szenerien in einer Flugzeugkabine effektiv kommandieren zu können, werden sogenannte Licht-Layer (Lichtebenen) eingeführte. Damit ist es möglich ein bereits gestartetes Licht-Szenario (Lichtdefinition) mit einem weiteren Licht-Szenario (Lichtszene) zu "überschreiben" ohne das unterlagerte Licht-Szenario (restliche Lichtdefinition) unterbrechen zu müssen. Um die Leuchten (Lichtmodule) im Flugzeug auf diese Weise kommandieren zu können werden neben dem Farbort (z.B. uvL / RGBW/ HSV) auch der Licht-Layer (Lichtszene, Lichtebene, Grundwert, Lichtdefinition) übertragen. Damit es auch möglich ist, ein Licht-Layer auch transparent zu überlagern wird ein weiterer Parameter benötigt, der Alpha-Kanal (Transparenzmodifikator). Mit dem Alpha-Kanal ist es möglich, Licht-Layer mit unterschiedlicher Deckkraft übereinander (Lichtszenen in unterschiedlichen Lichtebenen) zu legen. Auch ist es möglich, Layer abzudunkeln bzw. aufzuhellen, indem nur einen Alpha-Wert und die Helligkeit ohne Farbe (Transparenzwert und Deckwert des Transparenzmodifikators) übermittelt wird.

Weitere Merkmale, Wirkungen und Vorteile der Erfindung ergeben sich aus der nachfolgenden Beschreibung eines bevorzugten Ausführungsbeispiels der Erfindung sowie den beigefügten Figuren. Dabei zeigen, jeweils in einer schematischen Prinzipskizze:
- Figur 1: einen Ausschnitt aus einer Passagierkabine eines Passagierflugzeuges mit einer Kabinenbeleuchtung gemäß der Erfindung in einem schematischen Blockdiagramm,
- Figur 2: eine Lichtdefinition in der Kabinenbeleuchtung aus Figur 1 mit erzeugtem Licht im Verlauf über der Zeit.

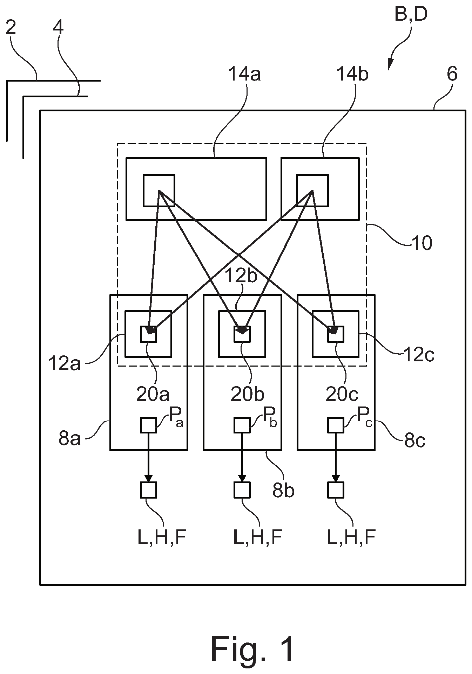

Figur 1 zeigt lediglich symbolisch angedeutet ein Passagierflugzeug 2, das eine Passagierkabine 4 enthält. Die Passagierkabine 4 enthält eine Kabinenbeleuchtung 6. Die Kabinenbeleuchtung 6 enthält im Beispiel drei Lichtmodule 8a-c sowie eine Gesamtsteuerung 10. Die Lichtmodule 8a-c befinden sich zusammen mit der Gesamtsteuerung 10 und dem restlichen Passagierflugzeug 2 in einem Betrieb B, in dem sie jeweils Licht L einer bestimmten Helligkeit H und Farbe F aussenden. Helligkeit H und Farbe F des jeweiligen Lichts L sind durch einen jeweiligen Parameter Pa-c in jedem der Lichtmodule 8a-c bestimmt.

Jedes der Lichtmodule 8a-c ist eine jeweils kleinste Einheit der Kabinenbeleuchtung 6, die durch die Gesamtsteuerung 10 noch individuell hinsichtlich ihres Parameters P einstellbar ist. Mit anderen Worten sind innerhalb des jeweiligen Lichtmoduls 8a-c eventuelle Einzellichtquellen nicht mehr unterschiedlich hinsichtlich ihrer Helligkeit H und Farbe F des erzeugten Lichts einstellbar.

In jedem der Lichtmodule 8a-c ist ein Steuermodul 12a-c enthalten. Außerhalb der Lichtmodule 8a-c befinden sich außerdem zwei Zentralmodule 14a,b. Die Zentralmodule 14a,b zusammen mit allen Steuermodulen 12a-c bilden die Gesamtsteuerung 10.

Für die Bestimmung des Parameters Pa-c enthält jedes der Lichtmodule 8a-c eine Lichtdefinition 20a-c, die diesem durch die Gesamtsteuerung 10 bereitgestellt ist bzw. wird. Im Rahmen dieser Lichtdefinition 20a-c ist die Beschreibung des zu erzeugenden Lichts L für eine geplante Betriebsdauer D hinterlegt bzw. definiert. Die Betriebsdauer D entspricht hier der Flugzeit für einen aktuell durchgeführten Flug des Passagierflugzeuges 2.

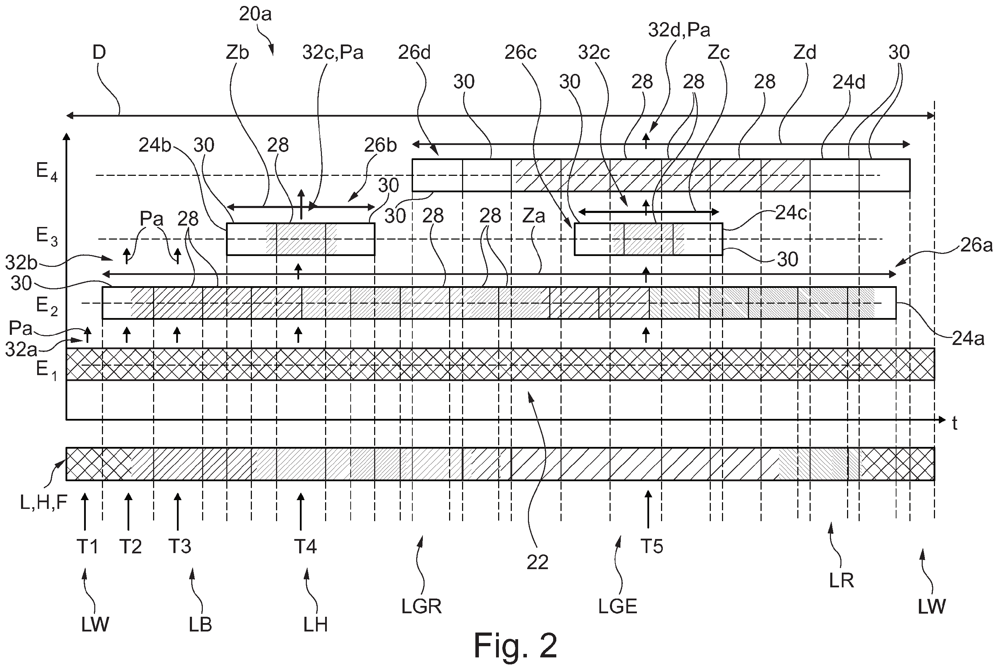

Wie im Folgenden (siehe auch Figur 2) näher erläutert wird, sind im Rahmen der Lichtdefinitionen 20a-c in jedem der Zentralmodule 14a,b jeweilige Lichtszenen 24a-d unabhängig voneinander erstellbar oder von außerhalb in diese einbringbar und innerhalb der Zentralmodule 14a,b vorhaltbar, um diese schlussendlich von dort aus an die Steuermodule 12a-c zu liefern.

Figur 2 zeigt beispielhaft die Lichtdefinition 20a für das Lichtmodul 8a stellvertretend auch für die anderen Lichtmodule 8b,c.

Die Lichtdefinition 20a ist für das Lichtmodul 8a wenigstens im Betrieb B bereitgestellt und beschreibt einen Verlauf des Parameters Pa über der Zeit t während der gesamten Betriebsdauer D. Figur 2 zeigt unterhalb der Lichtdefinition 20a symbolisch den Verlauf des Lichts L, das vom Lichtmodul 8a erzeugt wird, über der Zeit t.

Die Lichtdefinition 20a enthält eine erste Lichtebene E1, die sich über die gesamte Betriebsdauer B erstreckt und einen zeitlichen Verlauf eines Grundwertes 22 für den Parameter Pa enthält. Der Grundwert 22 entspricht hier jeweils einem vollwertigen Parameter Pa, d.h. bestimmt vollständig die Helligkeit H sowie die Farbe F des im Betrieb B vom Lichtmodul 8a zu erzeugenden Lichts L, hier weißem Licht voller Helligkeit.

Weiterhin ist wenigstens eine, hier im Beispiel drei, weitere hierarchisch geordnete Lichtebenen E2 bis E4 definiert. Die Hierarchie ist durch die Ziffern 1 bis 4 beschrieben. E1 ist die Lichtebene mit niedrigster Hierarchiestufe, E4 die Lichtebene mit höchster Hierarchiestufe.

In jeder der weiteren Lichtebenen E2 bis E4 ist jeweils wenigstens eine Lichtszene 24a-d definiert. Jede erstreckt sich über einen jeweiligen Zeitabschnitt Za-d der Betriebsdauer B. In der Lichtebene E2 ist eine einzige Lichtszene 24a definiert, die sich für den Zeitabschnitt Za erstreckt. In der Lichtebene E2 sind zwei Lichtszenen 24b,c definiert, die sich über die Zeitabschnitte Zb,c erstrecken. In der Lichtebene E4 ist wiederum eine Lichtszene 24d definiert, die sich über den Zeitabschnitt Zd erstreckt. Jede Lichtszene 24a-d enthält einen zeitlichen für Verlauf eines Modifikators 26a-d. Der Modifikator 26a-d bzw. dessen jeweilige zeitliche Teilabschnitte entsprechen wenigstens einem Teil eines Parameters Pa. Dabei entsprechen Deckmodifikatoren 28 jeweils einem vollwertigen Parameter P, bestimmen also vollständig Helligkeit H und Farbe F. Hingegen bestimmen Transparenzmodifikatoren 30 jeweils nicht einem vollwertigen Parameter Pa, bestimmen also Helligkeit H und Farbe F nicht vollständig, sondern nur teilweise, indem sie Parameter Pa aus Lichtebenen E1-3 niedrigerer Hierarchiestufen teilweise modifizieren, d.h. einen Teil des Parameters P bzw. einen Aspekt dessen unverändert lassen. Beispielsweise wird hinsichtlich des Lichts L nur dessen Farbe verändert, z.B. wird die Farbe entsättigt, d.h. wird "weißer". In einer Farbe wird also z.B. nur deren Rotanteil verändert oder es wird nur die Helligkeit des Licht L beeinflusst, ohne die Farbe F zu verändern usw.

Zu einem jeweiligen Zeitpunkt T innerhalb der Betriebsdauer B wird der aktuelle Parameter Pa anhand der Lichtdefinition 20a im Lichtmodul 8a wie folgt bestimmt:
Zunächst wird der Parameter Pa auf den Grundwert 22 der Lichtebene E1 niedrigster Hierarchiestufe gesetzt und bildet damit einen ersten Ebenenwert 32a. Da z.B. zum Zeitpunkt T1 keine Lichtszenen 24 in den hierarchisch höheren Lichtebenen E1-3 existieren, wird schlussendlich der Parameter Pa auf dem Ebenenwert 32a gesetzt und entspricht damit dem Grundwert 22, hier Licht LW weißer Farbe F und voller Helligkeit H von 100 %.

Im Zeitpunkt T2 wird wie im Zeitpunkt T1 verfahren und der Ebenenwert 32a (weiß, 100%) erzeugt. Jedoch existiert die Lichtszene 24a in der Lichtebene E2. Hierbei handelt sich um zum Zeitpunkt T2 um einen Transparenzmodifikator 30, der einem bestehenden Parameter P einen Anteil von 50 % blauer Farbe F hinzu mischt. Im Ergebnis gibt sich als Ebenenwert 32b hier weißes Licht L mit einem zugemischten 50-prozentigen Blauanteil.

Zum Zeitpunkt T3 enthält Lichtszene 24a einen Deckmodifikator 28, der einem vollwertigen Parameter P von Licht der Helligkeit H 100 % und der Farbe F von blau entspricht. Der Ebenenwert 32a von weißem Licht voller Helligkeit wird daher durch den Modifikator 26a ersetzt. Es ergibt sich rein blaues Licht LB.

Zum Zeitpunkt T4 existiert eine weitere Lichtszene 24b in der Lichtebene E3. Der vorher gebildete Ebenenwert 32b von vollständig blauem Licht wird hierdurch durch den Deckmodifikator 28 von vollständig hellblauem Licht wiederum ersetzt bzw. überschrieben, so dass sich der Parameter Pa zu Licht LH der Farbe F hellblau voller Helligkeit H ergibt.

Im Zeitverlauf der Lichtszene 24b nimmt hierbei in drei durch Trennstrichen gekennzeichneten Abschnitten die Beimischung des hellblauen Lichts von 0 % auf 100 % zu (Transparenzmodifikator 30), ist dann vollständig deckend (Deckmodifikator 28) und nimmt dann wieder von 100% auf 0% ab (Transparenzmodifikator 30).

In der Figur 2 ist im Ergebnis am Licht L zu erkennen, dass somit jede Lichtszene 24a-d, die auf einer Lichtebene E1 bis 4 höherer Hierarchiestufe befindet, die jeweilige Lichtsituation "überschreibt" (Deckmodifikator 28) oder "modifiziert" (Transparenzmodifikator 30). D.h. der jeweils anhand der Lichtebenen E1 bis 3 niedrigerer Priorität erzeugte Ebenenwert 32a-c wird ersetzt oder modifiziert. So ergibt sich beispielsweise zum Zeitpunkt T5 die Situation, dass das weiße Licht L anhand Grundwert 22 bzw. Ebenenwert 32a zunächst durch die Lichtszene 24a mit Hilfe eines Deckmodifikators 28 zu vollständige rotgrünem Licht in Form des Ebenenwertes 32b verändert wird. Durch die Lichtszene 24c wird dieses Licht wiederum zu vollständig hellblauem Licht gemäß Deckmodifikator 28 abgeändert, was zum Ebenenwert 32c führt. Durch einen weiteren Deckmodifikator 28 in der Lichtebene E4 wird das Licht L schließlich in vollständig gelbes Licht abgeändert, welches als Ebenenwertes 32d in den Parameter Pa überführt wird und daher schlussendlich vom Lichtmodul 8a erzeugt wird.

Figur 2 zeigt also unterhalb der Lichtdefinition 20a symbolisch das Ergebnis des von Lichtmodul 8a tatsächlich erzeugten bzw. effektiv erzeugten Lichts L. Es stellt sich somit ein Zeitverlauf ein, der von weißem Licht LW über blaues Licht LB zu hellblauem Licht LH zu grünem Licht LGR zu gelbem Licht LGE zu rotem Licht LR und wieder zu weißem Licht LW stets sanft überblendet wird.

### Bezugszeichenliste

- 2: Passagierflugzeug
- 4: Passagierkabine
- 6: Kabinenbeleuchtung
- 8a-c: Lichtmodul
- 10: Gesamtsteuerung
- 12a-c: Steuermodul
- 14a,b: Zentralmodul
- 20a-c: Lichtdefinition
- 22: Grundwert
- 24a-d: Lichtszene
- 26a-d: Modifikator
- 28: Deckmodifikator
- 30: Transparentmodifikator
- 32a-d: Ebenenwert

- B: Betrieb
- L: Licht
- H: Helligkeit
- F: Farbe
- Pa-c: Parameter
- D: Betriebsdauer
- Za-d: Zeitabschnitt
- t: Zeit
- E1-4: Lichtebene
- Za-d: Zeitabschnitt
- T1-5: Zeitpunkt

## Patentansprüche

1. Verfahren zum Betreiben eines Lichtmoduls (8a-c) in einer Passagierkabine (4) eines Passagierflugzeuges (2), wobei
das Lichtmodul (8a-c) im Betrieb (B) zu einem bestimmten Zeitpunkt (T) während einer geplanten Betriebsdauer (D) Licht einer bestimmten Helligkeit (H) und / oder Farbe (F) erzeugt, die durch einen zum Zeitpunkt (T) aktuellen Parameter (Pa-c) bestimmt werden, bei dem:
A - für das Lichtmodul (8a-c) eine Lichtdefinition (20a-c) bereitgestellt wird, die einen Verlauf des Parameters (Pa-c) über der Zeit (t) während der gesamten Betriebsdauer (D) bestimmt, und die wie folgt erzeugt wird oder ist:
A1 - eine sich über die Betriebsdauer (D) erstreckende erste Lichtebene (E1) wird oder ist definiert, die einen zeitlichen Verlauf eines Grundwertes (22) für den Parameter (Pa-c) enthält, wobei der Grundwert (22) einem vollwertigen Parameter (Pa-c) entspricht,
A2 - es wird oder ist wenigstens eine weitere hierarchisch geordnete Lichtebenen (E2-4) definiert,
A3 - wobei in jeder der weiteren Lichtebenen (E2-4) wenigstens eine Lichtszene (24a-d) definiert wird oder ist, die sich zumindest über einen jeweiligen Zeitabschnitt (Za-d) der Betriebsdauer (D) erstreckt,
A4 - wobei jede Lichtszene (24a-d) einen zeitlichen Verlauf eines Modifikators (26a-d) enthält, wobei der Modifikator (26a-d) wenigstens einem Teil eines Parameters (Pa-c) entspricht,
B - der aktuelle Parameter (Pa-c) für den jeweiligen Zeitpunkt (T) innerhalb der Betriebsdauer (D) anhand der Lichtdefinition (20a-c) wie folgt bestimmt wird:
B1 - der Grundwert (22) der ersten Lichtebene (E1) zum jeweiligen Zeitpunkt (T) wird sukzessive durch die Modifikatoren (26a-d) zum bestimmten Zeitpunkt (T) in hierarchischer Abfolge der Lichtebenen (E2-4) bis zur hierarchisch obersten Lichtebene (E4) zu einem Ebenenwert (32a-d) hin modifiziert,
B2 - der Parameter (Pa-c) wird als oberster Ebenenwert (32d) in Form des Ergebnisses aller Modifikationen des Grundwertes (22) übernommen.

2. Verfahren nach Anspruch 1,
**dadurch gekennzeichnet, dass**
in Schritt A4 wenigstens einer der Modifikatoren (26a-d) als Deckmodifikator (28) gewählt wird oder ist, der aus einem Deckwert besteht, der einem vollwertigen Parameter (Pa-c) entspricht.

3. Verfahren nach einem der vorhergehenden Ansprüche,
**dadurch gekennzeichnet, dass**
in Schritt A4 wenigstens einer der Modifikatoren (26a-d) als Transparenzmodifikator (30) gewählt wird, der einen Transparenzwert enthält, um einen Transparenzanteil des hierarchisch untergeordneten Ebenenwertes (32a-c) belässt und der einen Deckwert enthält, der einem vollwertigen Parameter (Pa-c) entspricht, und der nur den nicht zum Transparenzanteil gehörenden Anteil des untergeordneten Ebenenwertes (32a-c) ersetzt.

4. Verfahren nach einem der vorhergehenden Ansprüche,
**dadurch gekennzeichnet, dass**
das Lichtmodul (8a-c) ein Steuermodul (12a-c) enthält, und
- Schritt A des Verfahrens außerhalb der Steuermoduls (12a-c) ausgeführt wird, und
- die Lichtdefinition (20a-c) an das Steuermodul (12a-c) übertragen wird, und
- Schritt B des Verfahrens in dem Steuermodul (12a-c) ausgeführt wird.

5. Verfahren nach einem der vorhergehenden Ansprüche,
**dadurch gekennzeichnet, dass**
in einem Schritt
C - einer bestehenden Lichtdefinition (20a-c) wenigstens eine Lichtszene (24a-d) hinzugefügt oder verändert oder gelöscht wird.

6. Verfahren nach Anspruch 5,
**dadurch gekennzeichnet, dass**
der Schritt C während des tatsächlichen Ablaufes einer Betriebsdauer (D) zusammen mit den Schritten B ausgeführt wird.

7. Kabinenbeleuchtung (6) für eine Passagierkabine (4) eines Passagierflugzeuges (2),
- die wenigstens ein Lichtmodul (8a-c) enthält,
- die eine Gesamtsteuerung (10) enthält, die dazu eingerichtet ist, das Verfahren nach einem der vorhergehenden Ansprüche auszuführen.

8. Kabinenbeleuchtung (6) nach Anspruch 7,
**dadurch gekennzeichnet, dass**
jedes der Lichtmodule (8a-c) eine jeweils kleinste ansteuerbare Einheit der Kabinenbeleuchtung (6) ist, die noch individuell hinsichtlich ihres Parameters (Pa-c) des im Betrieb (B) von ihr erzeugten Lichts (L) einstellbar ist.

9. Kabinenbeleuchtung (6) nach einem der Ansprüche 7 bis 8,
in Verbindung mit Anspruch 4,
**dadurch gekennzeichnet, dass**
- die Kabinenbeleuchtung (6) wenigstens ein Steuermodul (12a-c) enthält, und
- jedes der Steuermodule (12a-c) in genau einem der Lichtmodule (8a-c) enthalten ist,
- die Kabinenbeleuchtung (6) wenigstens ein Zentralmodul (14a,b) enthält, das außerhalb der Lichtmodule (8a-c) angeordnet ist, und
- die Gesamtsteuerung (10) aus der Gesamtheit aller Steuermodule (12a-c) und Zentralmodule (14a,b) gebildet ist.

10. Kabinenbeleuchtung (6) nach Anspruch 9,
**dadurch gekennzeichnet, dass**
die Kabinenbeleuchtung (6) wenigstens zwei Zentralmodule (14a,b) enthält, in denen wenigstens je eine Lichtszene (24a-d) erstellbar und / oder einbringbar und / oder vorhaltbar ist.
